(19) Europäisches Patentamt
European Patent Office
Office européen des brevets

(11) **EP 1 819 839 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(21) Anmeldenummer: 05786053.8

(22) Anmeldetag: **22.09.2005**

(51) Int Cl.:
*C22C 38/00* (2006.01)      *C22C 38/20* (2006.01)
*C22C 38/46* (2006.01)      *C22C 38/54* (2006.01)

(86) Internationale Anmeldenummer:
**PCT/EP2005/010232**

(87) Internationale Veröffentlichungsnummer:
**WO 2006/045383 (04.05.2006 Gazette 2006/18)**

(54) **ROSTFREIER MARTENSITISCHER CHROMSTAHL**

STAINLESS, MARTENSITIC CHROMIUM STEEL

ACIER CHROME MARTENSITIQUE INOXYDABLE

(84) Benannte Vertragsstaaten:
FR SE

(30) Priorität: **23.10.2004 DE 102004051629**

(43) Veröffentlichungstag der Anmeldung:
**22.08.2007 Patentblatt 2007/34**

(73) Patentinhaber: **Stahlwerk Ergste Westig GmbH
58239 Schwerte (DE)**

(72) Erfinder:
• **PACHER, Oskar
A-8041 Graz (AT)**
• **LENOIR, Werner
59432 Unna (DE)**
• **KLOSS-ULITZKA, Gisbert
58809 Neuenrade (DE)**

• **NICOLINI, Guido
58638 Iserlohn (DE)**

(74) Vertreter: **Von Renesse, Dorothea
König Szynka Tilmann von Renesse
Patentanwälte Partnerschaft
Lohengrinstrasse 11
40549 Düsseldorf (DE)**

(56) Entgegenhaltungen:
**EP-A- 0 638 658      EP-A- 1 306 457
DE-A1- 1 553 841**

• **PATENT ABSTRACTS OF JAPAN Bd. 1998, Nr. 05, 30. April 1998 (1998-04-30) & JP 10 018001 A (HITACHI METALS LTD), 20. Januar 1998 (1998-01-20)**

**Beschreibung**

Die Erfindung bezieht sich auf einen rostfreien martensitischen Chromstahl.

Derartige Stähle mit verhältnismäßig hohem Kohlenstoffgehalt bis 1 % und bis 17% Chrom eignen sich wegen ihrer hohen Härte und guten Schneidleistung als Werkstoff zum Herstellen von Messern. Infolge der hohen Gehalte an Kohlenstoff und Chrom kommt es bei diesen Stählen zum Entstehen grober Chromkarbide und demzufolge zu einer Korngrenzenversprödung sowie einer Chromverarmung im Umfeld der Chromkarbide. Die Ursache für das Entstehen der Karbide ist die beim Herstellen von Schweißverbindungen in den Werkstoff eingebrachte Schweißwärme, die zu einer Chromdiffusion und einer Vergröberung der Karbidphase führt. Mit der Chromverarmung ist eine entsprechende Verringerung der Korrosionsbeständigkeit im Bereich der Schweißstellen verbunden. Unter korrodierenden Bedingungen kommt es daher leicht zu Ausbröckelung und Rissbildungen im Bereich der Chromkarbide bzw. der damit verbundenen Chromverarmungen.

Zur Verbesserung der Korrosionsbeständigkeit schlägt die europäische Offenlegungsschrift 0 638 658 einen rostfreien martensitischen Stahl mit 0,5 bis 0,85% Kohlenstoff und Stickstoff, 0,15 bis 0,24% Stickstoff, bis 0,5% Silizium, bis 0,7% Mangan, bis 0,5% Nickel, 14 bis 17% Chrom, 1 bis 2,5% Molybdän und 0,2 bis 1 % Vanadium vor, dessen Anteil an Restaustenit unter 10 Vol.-% liegt. Der hohe Stickstoffgehalt verbessert die Korrosionsbeständigkeit, beeinträchtigt jedoch andererseits die Schweißbarkeit. Die Ursache dafür ist das Freisetzen von gelöstem und von gebundenem Stickstoff bei einem Aufschmelzen, wie es beim Schweißen stattfindet. Die Folge davon ist das Entstehen von Blasen und Poren, d.h. von sogen. Gasporosität beim Wiedererstarren der Schweiße, die in Wechselwirkung mit in die Schweiße gelangten Oberflächenoxiden die Riss- und Bruchempfindlichkeit erhöhen, da die Oxide mangels Benetzbarkeit durch das aufgeschmolzene Metall nicht zur Oberfläche aufzuschwimmen und sich dort nicht abzuscheiden vermögen; sie verbleiben daher unter Porenbildung in dem rasch wieder erstarrenden aufgeschmolzenen Metall. Diese Gefahr ist insbesondere bei einem Punktschweißen gegeben.

Mit Hilfe von Zusatzstoffen kann es bei den konventionellen Schweißverfahren wie Argon-Lichtbogen- oder Unterpulverschweißen gelingen, den Verbleib von Oberflächenoxiden in der Schweiße zu verringern. Derartige Zusatzstoffe benetzen die Oberflächenoxide und erleichtern deren Aufschwimmen zur Oberfläche, wo sie nach dem Erstarren der Schweiße durch Schleifen oder Beizen entfernt werden können. Beim Unterpulverschweißen kommt es wesentlich auf die Verwendung eines geeigneten Abdeckpulvers an. Das Pulver muss eine Schlacke bilden, die sich leicht und vollständig entfernen lässt, weil verschlackte Pulverreste an Schweißnähten Spaltkorrosion hervorrufen können. Glatte, saubere und kerb- bzw. rissfreie Schweißnähte vermindern hingegen die Korrosionsgefahr.

So Erfolg versprechend die Verwendung von Zusatzstoffen und Schweißpulvern auch ist, sie kommt aus Gründen der fehlenden Zugänglichkeit der Schweißstelle beim Punkt-, beispielsweise Laserpunktschweißen nicht in Frage. Hinzu kommt, dass die Abmessungen punktgeschweißter Teile üblicherweise sehr gering sind.

Beim Schweißen gehärteter und angelassener Messer oder Messerelemente ergibt sich ein weiteres Problem daraus, dass es bei der Wärmebehandlung aus der Anwesenheit von Sauerstoff und Feuchtigkeit zu einer Verstärkung des Oxidbelags kommt, der an sich ja bekanntermaßen die Rostbeständigkeit bzw. Passivierung der Chromstähle bewirkt. Diese Oxidschicht wird beim Laserpunktschweißen notwendigerweise aufgebrochen mit der Folge, dass die Bruchstücke der Oxidschicht wegen der für das Punktschweißen charakteristischen hohen Abkühlungsgeschwindigkeit in der Schweiße verbleiben und die Qualität der Schweißverbindung beeinträchtigen. Das rasche Aufschmelzen und Erstarren der Schweiße beim Punktschweißen verhindert ein vollständiges Durchmischen des geschmolzenen Stahls, so dass es in unmittelbarer Umgebung der in die Schweiße gelangten Oberflächenoxide wegen deren geringen Adhäsions- und Benetzungsvermögens zum Entstehen von Benetzungsporen, Mikrolunker, Spannungen und Rissen, d.h. zu Schwachstellen im Gefüge kommt.

Andere elektrische Schweißverfahren kommen wegen des damit verbundenen hohen Wärmeeinbringens und dessen schwierige Regulierbarkeit für das Schweißen von Kleinteilen mit geringen Querschnitten nicht in Frage; sie sind mit einer breiten Wärmeeinflusszone und der Gefahr örtlicher Überhitzungen verbunden. Das führt zu instabilen Gefügezuständen und demzufolge auch zu einer Beeinträchtigung der Korrosionsbeständigkeit.

Die Probleme beim Schweißen führen dazu, dass aus Stählen mit hohem Stickstoffgehalt hergestellte Messer und Klingen nicht geschweißt, sondern in Kunststoff eingefasst werden. Das setzt der Verwendbarkeit der Schneidmesserstähle enge Grenzen, da sich Schweißverbindungen in vielen Bereichen nicht vermeiden lassen.

Das ist beispielsweise bei so genannten Scherfolienschneidmessern für elektrische Rasierapparate der Fall, bei denen ein Messer über die Unterseite einer Scherfolie gleitet und die durch die Öffnungen der Scherfolie ragenden Haare abschert. Hierfür kommen gekrümmte Messer mit radial ausgerichteten Schneidlamellen zur Verwendung. Diese Messer werden aus gestanzten Streifen hergestellt, die zu einem zylindrischen Körper gebogen und dessen Stoßkanten miteinander verschweißt werden. Die dabei entstehende Schweißnaht bestimmt nicht nur die Lebensdauer des Schneidmessers, sondern auch der Schwerfolie. Die Scheißnaht muss daher eine möglichst hohe Korrosionsbeständigkeit besitzen. Andernfalls kommt es zu Beschädigung der Scherfolie und oft auch zu Verletzungen beim Rasieren.

Bekannt sind auch Rasierapparate mit freilaufendem Obermesser und Untermesser, die sich beim Rasieren parallel gegeneinander bewegen. Die Messer sind zur Führung seitlich bzw. außerhalb der Schneidkanten durch Punktschweißen mit Antriebs- und Halterungselementen versehen, um eine stabile oszillierende Gleitbewegung zu gewährleisten. Brechen die Schweißverbindungen während des Betriebs als Folge einer Korrosion oder von inneren, durch grobe Karbide verursachten Spannungen, kann es zu einem Verklemmen der Messer und auch zu einem Messerbruch mit der Gefahr einer Verletzung des Benutzers kommen.

Der Erfindung liegt daher das Problem zugrunde, einen rostfreien martensitischen Chromstahl mit verbesserter Schweißbarkeit und Korrosionsbeständigkeit zu schaffen, der sich insbesondere auch für das Punktschweißen, vorzugsweise mittels Laserstrahls eignet.

Zur Lösung dieses Problems schlägt die Erfindung einen Chromstahl mit 0,25 bis 0,45% Kohlenstoff, 0,20 bis 1,0% Silizium, 0,5 bis 2% Mangan, 13 bis 18% Chrom, 0,1 bis 2% Nickel, 0,5 bis 2,5% Molybdän, 0,1 bis 2% Kupfer, 0,1 bis 0,20% Stickstoff, jeweils bis 0,1% Titan, Zirkonium und Niob, 0,001 bis 0,008% Bor und 0,1 bis 0,4% Vanadium, Rest Eisen vor. Vorzugsweise enthält der Stahl einzeln oder nebeneinander 0,20 bis 0,60% Silizium, höchstens 1,8% Mangan, 15 bis 17% Chrom, 0,5 bis 1,5% Nickel, bis 1,5% Molybdän, 0,2 bis 1,5% Kupfer, bis 0,15% Stickstoff, bis 0,35% Vanadium und 0,002 bis 0,006% Bor.

Der Stahl besitzt ein martensitisches Gefüge, das bei ausreichender Zähigkeit einen hohen Verschleißwiderstand gewährleistet.

Bor, Nickel und Kupfer, aber vermutlich auch Mangan verbessern die Benetzbarkeit der in der Schweiße befindlichen Oberflächenoxide. Zu hohe Gehalte an Mangan und Nickel verringern die Temperatur, bei der die Martensitbildung beginnt (Ms-Temperatur) auf Werte, die eine vollständige Umwandlung des Gefüges bei Raumtemperatur unmöglich machen.

Die Begrenzung des Kohlenstoffgehalts auf höchstens 0,45% verhindert das Entstehen grober Karbide und von Karbidnetzen, die sich nicht mehr genügend verfeinern lassen. Außerdem begrenzt das geringe Kohlenstoffangebot die Menge der Chromkarbide und daher auch die Chromverarmung im Bereich dieser Karbide. Der obere Grenzwert für den Stickstoffgehalt hält das Entstehen von Karbonitriden in Grenzen, die beim Aufschmelzen während des Schweißens Stickstoff freisetzen, der zu Porosität, Materialauswürfen und inneren Spannungen führt. Mangan stabilisiert wie auch Nickel die Austenitphase und verschiebt daher die Martensitbildung beim Abkühlen aus der Schweißhitze zu niedrigeren Temperaturen. Daraus erklären sich die jeweiligen oberen Gehaltsgrenzen dieser Legierungsbestandteile. Außerdem dürfte Mangan die Benetzung von Oxideinschlüssen fördern. Im Hinblick auf eine gute Härtbarkeit ist es jedoch von Vorteil, wenn der Mangangehalt 1,8% nicht übersteigt.

Bor bildet bereits in sehr geringer Konzentration aufgrund seiner hohen Sauerstoffaffinität und seines hohen Diffusionsvermögens mit Oxideinschlüssen Oxiboride mit verbessertem Adhäsionsverhalten in der Stahlmatrix. Borgehalte über etwa 0,008% bringen jedoch die Gefahr des Entstehens versprödend wirkender Boriedphasen mit sich.

Nickel und Kupfer erhöhen die Festigkeit und verbessern die Qualität der Schweißverbindungen aufgrund einer Verbesserung der Benetzbarkeit der Oxideinschlüsse sowie einer besseren Adhäsion der Oxideinschlüsse in der Matrix. Besonders vorteilhaft ist es, wenn die Gehalte an Kupfer und Nickel der folgenden Bedingung genügen:

$$(\%Cu) / (\%Cu + Ni) = 0,2 \text{ bis } 0,9.$$

Niob, Titan und Zirkonium bilden zusammen mit Kohlenstoff und Stickstoff bei höheren Gehalten grobe Karbide bzw. Karbonitride, die sich nur schwer verfeinern lassen. Es ist daher von Vorteil, wenn der Gesamtgehalt an Niob, Titan und Zirkonium über die zulässigen Einzelwerte hinaus wie folgt begrenzt wird:

$$(\%Nb) + (\%Ti) + (\%Zr) = 0,01 \text{ bis } 0,1.$$

Vanadium bildet hingegen feinverteilte Karbide und Karbonitride; es gewährleistet daher eine hohe Abrieb- und Verschleißfestigkeit. Ab etwa 0,4% besteht jedoch die Gefahr, dass grobkörnige Karbide entstehen. Vorzugsweise übersteigt der Vanadiumgehalt daher 0,35% nicht.

Die Löslichkeit für der im Gefüge vorhandenen Karbide oder Karbonitride und damit die Schweißbarkeit lassen sich weiterhin noch verbessern, wenn die mittlere Größe der Karbide und Karbonitride des Stahls vor dem Verschweißen auf unter 5 μm eingestellt wird. Ein zu grobes Korn vermag sich während der kurzen Aufschmelzzeiten beim Schweißen in der Matrix nicht vollständig zu lösen. Es verbleiben daher Kornreste im Gefüge, die Inhomogenitäten darstellen und zu inneren Spannungen führen. Die maximale Korngröße sollte daher unter dem angegebenen Wert liegen. Dies lässt sich dadurch erreichen, dass warmgewalztes Band nach einem Lösungsglühen bei einer Temperatur von 980 bis 1.100 °C während einer Dauer von 3 bis 15 min. mindestens einmal innerhalb von höchstens 10 ms mit einer Querschnittsabnahme von 20 bis 45 % schnellverformt wird. Vorzugsweise beträgt die Dauer des Schnellverformens mindestens 1 ms.

Die Erfindung wird nachfolgend anhand von Ausführungsbeispielen des näheren erläutert. Dabei zeigen:

Fig. 1   ein Scherfolienschneidmesser in der Draufsicht,

Fig.2   Messeranordnungen mit ebenen Messern,

Fig. 3   Proben von Schweißverbindungen für Zugversuche,

Fig. 4   eine grafische Darstellung der Ergebnisse der Zugversuche mit den punktverschweißten Proben der Fig. 3,

Fig. 5   die Schweißverbindung des Versuchs 2,

Fig. 6   die Schweißverbindung des Versuchs 8,

Fig. 7   die Schweißverbindung des Versuchs 17,

Fig. 8   ein Detail der Schweißverbindung der Fig. 7.

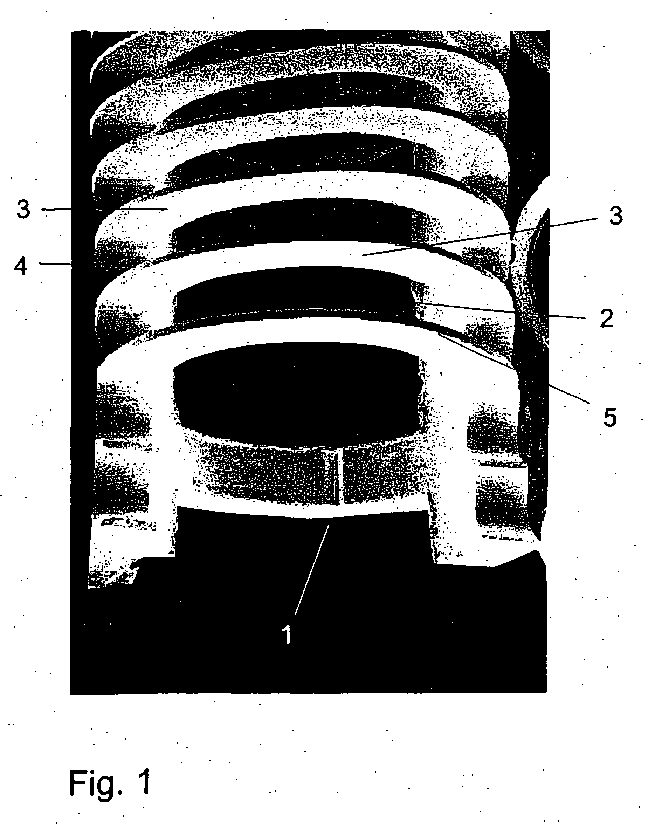

Das Scherfolienschneidmesser der Fig. 1 besteht aus einem zylindrisch gebogenen, an seinen Längs- bzw. Stoßkanten verschweißten Blechzuschnitt 1 mit radialen Schlitzen 2, zwischen denen sich scharfkantige Messerlamellen 3 mit

Schneidkanten 4, 5 erstrecken, die mit einer nicht dargestellten komplementär gekrümmten gelochten Scherfolie zusammenwirken.

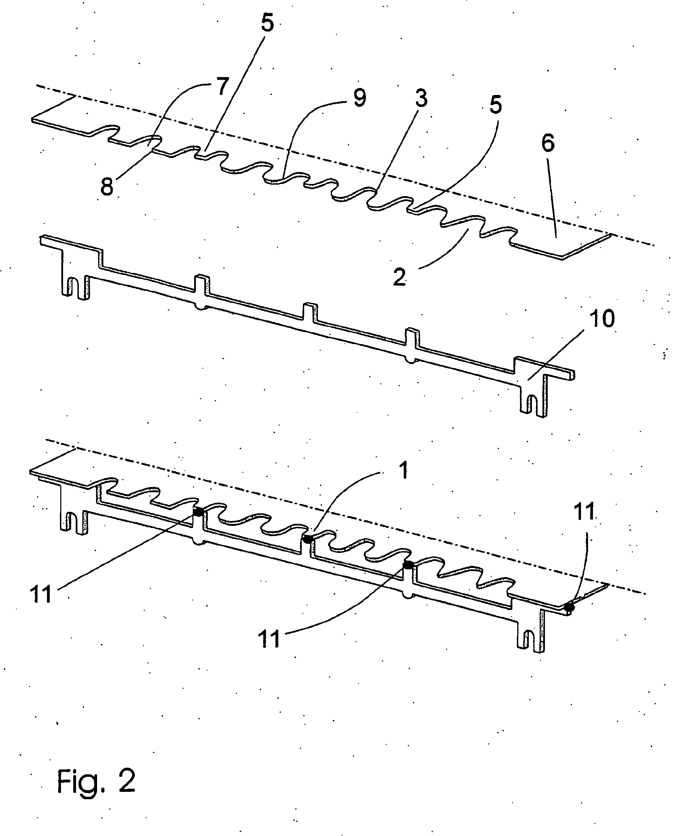

Die in Fig. 2 dargestellten Messerblätter 6 besitzen zu einer Seite offene Schlitze 7 mit Schneidkanten 8, 9; sie sind in situ mit Antriebs- und Halteelementen 10 über Punktschweißungen 11 verbunden.

In der nachfolgenden Tabelle I sind erfindungsgemäßen Versuchsstähle L1 bis L 5 außerhalb der Erfindung angesiedelten Versuchsstählen L 6 bis L 9 gegenüber gestellt, aus denen zylindrische Proben abgegossen, dann überschliffen und in einer Warmstauchpresse bis 1.100°C zu runden Scheiben verformt wurden. Die Scheiben wurden 6 min. bei 1.150°C lösungsgeglüht und von der Glühtemperatur abgeschreckt. Zum Entfernen von Oberflächenoxiden und Anlaufschichten wurden die Proben sodann überschliffen und dabei auf ein einheitliches Maß von 25 x 2 mm gebracht.

Tabelle I

| Stahl | %C | %N | %Si | %Mn | %Cr | %Ni | %Mo | %Cu | %V | %Nb | %Ti | %Zr | %B |
|---|---|---|---|---|---|---|---|---|---|---|---|---|---|
| L1 | 0,25 | 0,11 | 0,42 | 1,21 | 15,3 | 0,55 | 0,52 | 0,45 | 0,21 | Sp. | Sp. | Sp. | 0,003 |
| L2 | 0,36 | 0,14 | 0,38 | 0,96 | 15,7 | 1,05 | 0,96 | 0,22 | 0,27 | Sp. | Sp. | Sp. | 0,005 |
| L3 | 0,41 | 0,13 | 0,51 | 0,72 | 16,4 | 0,97 | 0,70 | 0,92 | 0,17 | 0,05 | Sp. | Sp. | 0,006 |
| L4 | 0,43 | 0,15 | 0,47 | 0,65 | 16,7 | 1,45 | 1,50 | 0,96 | 0,14 | 0,03 | Sp. | 0,008 | 0,004 |
| L5 | 0,44 | 0,11 | 0,48 | 1,11 | 16,8 | 1,23 | 0,55 | 1,12 | 0,16 | Sp. | Sp. | 0,009 | 0,005 |
| L6 | 0,15 | 0,26 | 0,52 | 0,38 | 14,3 | 0,2 | 0,60 | 0,03 | 0,33 | Sp. | - | Sp. | - |
| L7 | 0,20 | 0,41 | 0,65 | 0,42 | 15,4 | 0,18 | 0,92 | 0,05 | 0,18 | 0,01 | - | - | <0,001 |
| L8 | 0,45 | 0,19 | 0,42 | 0,66 | 16,3 | 0,1 | 0,55 | 0,03 | 0,41 | Sp. | - | - | <0,001 |
| L9 | 0,53 | 0,02 | 0,38 | 0,57 | 14,6 | 0,12 | 0,28 | 0,05 | 0,32 | 0,02 | - | - | <0,001 |

Bei einer Gefügeuntersuchung waren einzelne Karbide mit einem Durchmesser von 6 bis 15μm erkennbar. Zur Verfeinerung der Karbide wurden die Proben in einer hydraulischen Presse mit unterschiedlicher Verformungsgeschwindigkeit kalt verformt. Dabei erwiesen sich Verformungszeiten unter 15 ms und insbesondere von 8 ms als besonders vorteilhaft.

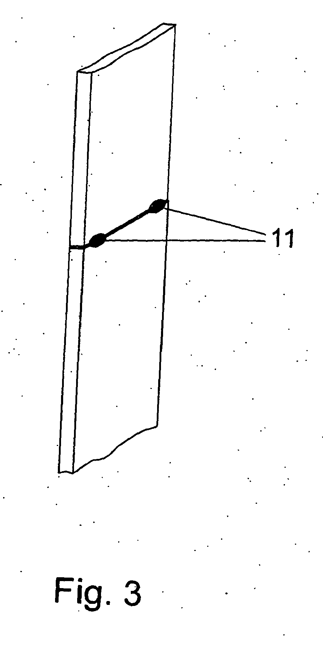

Aus den Proben wurden Streifen mit einer Breite von 10 mm und einer Dicke von 0,22 mm geformt, 4 min. bei 1.050 °C geglüht und von der Glühtemperatur mit Wasser abgeschreckt. Die Probestreifen wurden sodann überschliffen und entsprechend der Darstellung in Fig. 3 mit Hilfe eines NdYAG-Festkörperlasers paarweise über je zwei Schweißpunkte miteinander verbunden (vgl. Fig. 3).

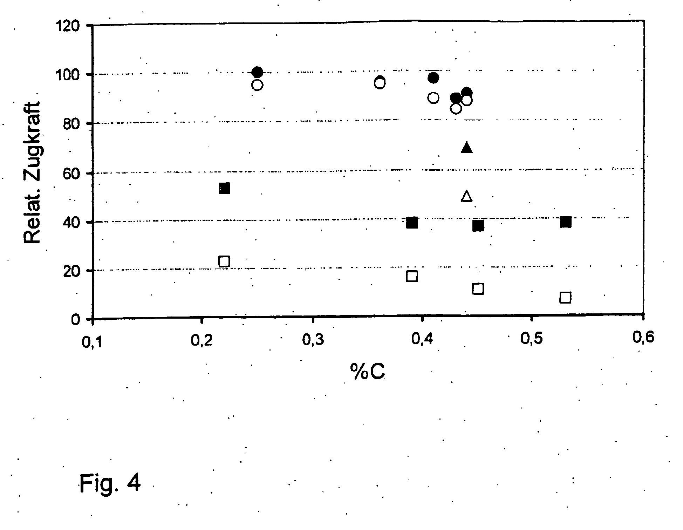

Die Proben wurden teilweise nach einer korrosiven Beanspruchung durch Eintauchen in einen Elektrolyten einem Zugversuch unterworfen, dessen Ergebnis aus dem Diagramm der Fig. 4 ersichtlich sind. Darin sind die erfindungsgemäßen Legierungen durch Kreise, die Vergleichslegierungen durch Quadrate kennzeichnet. Die geschlossenen Kreis und Quadrate beziehen sich auf die Proben, die zunächst in einem Elektrolyten gelagert waren, um die Korrosionsbeständigkeit zu prüfen.

Eine erste Versuchsreihe zeigt die relative Bruchkraft nicht korrodierter Proben, bezogen auf die Bruchkraft des Stahls L 1, die als 100% genommen wurde. Die Proben sind in Fig. 4 durch volle Kästchen gekennzeichnet. In einer zweiten Versuchsreihe, die durch offene Kästchen gekennzeichnet ist, wurden Proben des Stahls L 1 mit der aus Fig. 3 ersichtlichen Beschaffenheit 36 Stunden lang in eine Salzlösung mit 2,5% Kaliumchlorid, 1,5% Natriumchlorid und einem Zusatz von Essigsäure mit eine pH-Wert von 4,5 getaucht und danach einem Zugversuch unterworfen. Die aus Fig. 4 ersichtlichen Werte zeigen die Überlegenheit der erfindungsgemäßen Proben (obere Wertegruppe) im Vergleich zu den herkömmlichen Vergleichslegierungen (untere Wertegruppe).

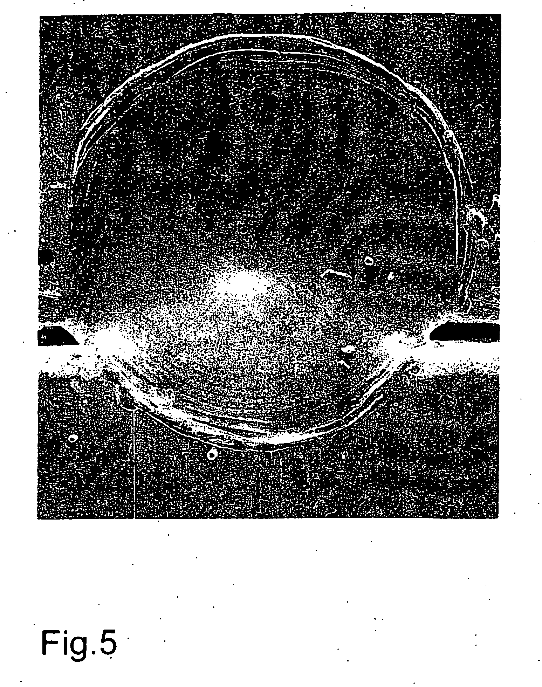

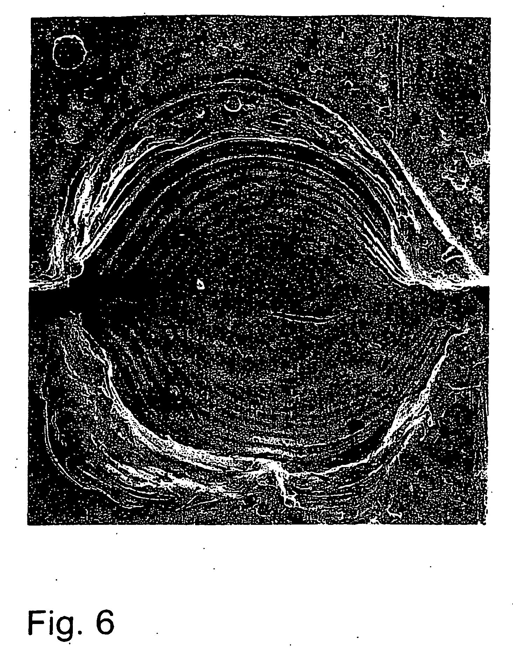

Die Abbildung der Fig. 5 zeigt die Schweißverbindung aus dem Versuch 2 mit einem sehr einheitlichen und allseitig gleichmäßig aufgeschmolzenen Material. Hingegen ist die Abbildung der Schweißprobe der Fig. 6 aus dem Versuch 8 durch Materialauswürfe beim Aufschmelzen und Risse gekennzeichnet, eine Folge des mit 0,41% zu hohen Stickstoffgehalts, grobkörniger Karbide und mangelnder Benetzung der Oberflächenoxide.

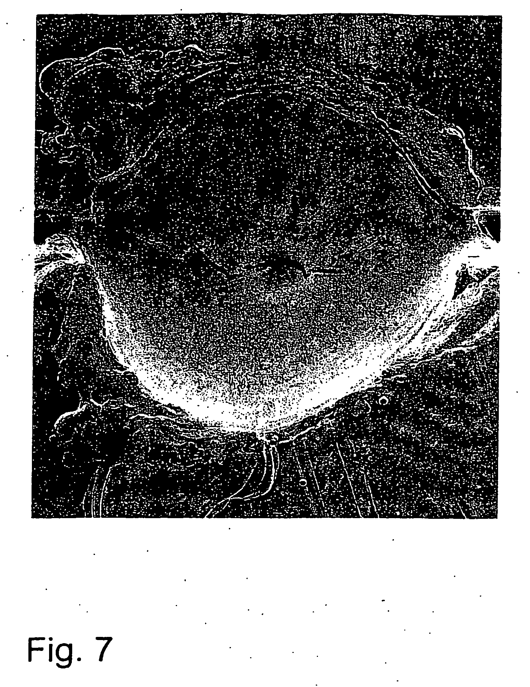

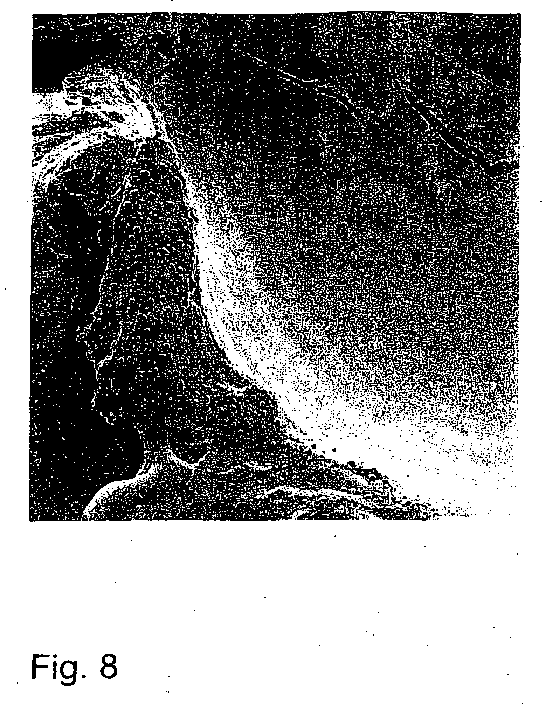

Die Abbildung der Schweißverbindung der Fig. 7 aus dem Versuch 17 zeigt starken Auswurf aufgrund einer Stickstoffausgasung mit starker Rissbildung und in der Detail-Abbildung der Fig. 8 eine schaumartige Struktur mit deutlich erkennbaren Gasblasen.

Die Daten sämtlicher Versuche ergeben sich aus der Tabelle II mit einer Bewertung der Schweißgutoberfläche; sie zeigen, dass die Versuche 7 bis 9 und 16 bis 18 mit den nicht unter die Erfindung fallenden Versuchsstählen L 6 bis L 9 zu fehlerhaften Schweißverbindungen führten. Die Versuche 6 und 16 zeigen die Bedeutung der vorzugsweise unter 5 μm liegenden Korngröße; die Zugfestigkeit der betreffenden Proben ist vergleichsweise gering.

Tabelle II

| Vers. Nr. | Leg | Max. Korngr μm | $t_v$ [ms] | Punktschw. Lasertyp | Auslag Elektrolyt | Relat Festigk. | Anmerkung zur Oberfläche |
|---|---|---|---|---|---|---|---|
| 1 | L1 | 2 | 8 | NdYAG | keine | 100 | Gut |
| 2 | L2 | 3 | 8 | NdYAG | keine | 96 | Gut |
| 3 | L3 | 3 | 8 | NdYAG | keine | 97 | Gut |
| 4 | L4 | 2-3 | 8 | NdYAG | keine | 89 | Gut |
| 5 | L5 | 3-4 | 8 | NdYAG | keine | 91 | Gut |
| 6 | L5 | 6 | 12 | NdYAG | keine | 69 | Gut |
| 7 | L6 | 6 | 10 | NdYAG | keine | 53 | Auswürfe |
| 8 | L7 | 7 | 10 | NdYAG | keine | 38 | Risse |
| 9 | L8 | 13 | 15 | NdYAG | keine | 37 | Auswürfe, Risse |
| 10 | L9 | 12 | 18 | NdYAG | keine | 38 | Risse |
| 11 | L1 | 2 | 8 | NdYAG | 36 h | 95 | Gut |
| 12 | L2 | 3 | 8 | NdYAG | 36 h | 95 | Gut |
| 13 | L3 | 3 | 8 | NdYAG | 36 h | 89 | Gut |
| 14 | L4 | 2-3 | 8 | NdYAG | 36 h | 85 | Gut |
| 15 | L5 | 3-4 | 8 | NdYAG | 36 h | 88 | Gut |
| 16 | L5 | 6 12 | | NdYAG | 36 h | 49 | Gut |
| 17 | L6 | 5 | 10 | NdYAG | 36 h | 23 | starke Risse |
| 18 | L7 | 7 | 10 | NdYAG | 36 h | 16 | starke Auswürfe, Risse |
| 19 | L8 | 13 | 15 | NdYAG | 36 h | 11 | Auswürfe, starke Risse |

(fortgesetzt)

| Vers. Nr. | Leg | Max. Korngr $\mu$m | $t_v$ [ms] | Punktschw. Lasertyp | Auslag Elektrolyt | Relat Festigk. | Anmerkung zur Oberfläche |
|---|---|---|---|---|---|---|---|
| 20 | L9 | 12 | 18 | NdYAG | 36 h | 7 | starke Risse |
| $t_v$: Verformungszeit in Millisekunden | | | | | | | |

Der erfindungsgemäße Stahl eignet sich wegen seiner Festigkeit, seines Verschleißwiderstandes, seiner Zähigkeit zur Vermeidung von Schneidenbrüchen insbesondere als schweißbarer Werkstoff für Messer, Messerelemente in Rasierapparaten und Haarschneider, Lamellenmesser, Folienschneidmesser, Rotationsschneidmesser und Epiliermesser. Die Schweißverbindungen sind beständig gegen Vibrationen, Korrosion beispielsweise durch Schweiß- und Temperaturwechsel.

## Patentansprüche

1.  Rostfreier martensitischer Chromstahl mit

| | | | |
|---|---|---|---|
| 0,25 | bis | 0,45% | Kohlenstoff |
| 0,20 | bis | 1,0% | Silizium |
| 0,5 | bis | 2% | Mangan |
| 13 | bis | 18% | Chrom |
| 0,1 | bis | 2,0% | Nickel |
| 0,5 | bis | 2,5% | Molybdän |
| 0,1 | bis | 2% | Kupfer |
| 0,1 | bis | 0,20% | Stickstoff |
| | bis | 0,1% | Titan |
| | bis | 0,1% | Zirkonium |
| | bis | 0,1% | Niob |
| 0,001 | bis | 0,008% | Bor |
| 0,1 | bis | 0,4% | Vanadium |

Rest Eisen und erschmelzungsbedingte Verunreinigungen.

2.  Chromstahl nach Anspruch 1, der jedoch einzeln oder nebeneinander 0,20 bis 0,60% Silizium, bis 1,8% Mangan, 15 bis 17% Chrom, 0,5 bis 1,5% Nickel, 0,5 bis 1,5% Molybdän, 0,2 bis 1,5% Kupfer, bis 0,15% Stickstoff, bis 0,35% Vanadium und 0,002 bis 0,006% Bor enthält.

3.  Chromstahl nach Anspruch 1 oder 2 mit einem Gesamtgehalt an Titan, Niob und Zirkonium von 0,01 bis 0,1%.

4.  Chromstahl nach einem der Ansprüche 1 bis 3, der der Bedingung

$$(\%Cu) / (\%Cu + \%Ni) = 0,2 \text{ bis } 0,9$$

genügt.

5.  Chromstahl nach einem der Ansprüche 1 bis 4 mit einer Karbidkorngröße unter 5$\mu$m.

6.  Verfahren zum Einstellen der Karbidkorngröße bei einem Chromstahl nach einem der Ansprüche 1 bis 4, **gekennzeichnet durch** mindestens eine Kaltverformung mit einer Querschnittsabnahme von 20 bis 45 % innerhalb eines Zeitraums bis 10 Millisekunden.

7.  Verfahren nach Anspruch 6, **dadurch gekennzeichnet, dass** der Stahl vor dem Kaltverformen 3 bis 15 min. bei 800 bis 1.150 °C lösungsgeglüht und dann abgeschreckt wird.

8. Verwendung eines Chromstahl nach einem der Ansprüche 1 bis 7 als schweißbarer Werkstoff zum Herstellen von Messern und Messerelementen in Rasierapparaten und Haarschneidern, Lamellenmessern, Folienschneidmessern, Rotationsschneidmessem und Epiliermessern.

## Claims

1. Stainless martensitic chromium steel with:

| 0.25 | to | 0.45% | carbon |
|------|------|--------|------------|
| 0.20 | to | 1.0% | silicium |
| 0.5 | to | 2% | manganese |
| 13 | to | 18% | chromium |
| 0.1 | to | 2.0% | nickel |
| 0.5 | to | 2.5% | molybdenum |
| 0.1 | to | 2% | copper |
| 0.1 | to | 0.20% | nitrogen |
| | up to | 0.1 % | titanium |
| | up to | 0.1 % | zirconium |
| | up to | 0.1 % | niobium |
| 0.001 | to | 0.008% | boron |
| 0.1 | to | 0.4% | vanadium |

remainder iron and melt-induced contaminants.

2. Chromium steel according to claim 1, but containing individually or successively 0.20 to 0.60% silicium, up to 1.8% manganese, 15 to 17% chromium, 0.5 to 1.5% nickel, 0.5 to 1.5% molybdenum, 0.2 to 1.5% copper, up to 0.15% nitrogen, up to 0.35% vanadium and 0.002 to 0.006% boron.

3. Chromium steel according to claim 1 or 2 with a total content of titanium, niobium and zirconium of 0.01 to 0.1 %.

4. Chromium steel according to any of claims 1 to 3, which fulfils the condition:

$$(\%Cu) / (\%Cu + \%Ni) = 0.2 \text{ to } 0.9.$$

5. Chromium steel according to any of claims 1 to 4 with a carbide grain size of less than 5 $\mu$m.

6. Method for setting the carbide grain size in a chromium steel according to any of claims 1 to 4, **characterised by** at least one cold forming with a cross-section reduction of 20 to 45% within a time period of up to 10 milliseconds.

7. Method according to claim 6, **characterised in that** before the cold forming, the steel is solution-treated for 3 to 15 minutes at 800 to 1150°C and then quenched.

8. Use of a chromium steel according to any of claims 1 to 7 as a weldable material for production of cutters and cutter elements in razors and hair cutters, blade cutters, foil cutters, rotary cutters and epilator cutters.

## Revendications

1. Acier au chrome martensitique inoxydable, comprenant :

0,25 à 0,45 % de carbone ;

0,20 à 1,0 % de silicium,
0,5 à 2 % de manganèse,
13 à 18 % de chrome,
0,1 à 2,0 % de nickel,
0,5 à 2,5 % de molybdène,
0,1 à 2 % de cuivre,
0,1 à 0,20 % d'azote,
Jusqu'à 0,1 % de titane,
Jusqu'à 0,1 % de zirconium,
Jusqu'à 0,1 % de niobium,
0,001 à 0,008 % de bore,
0,1 à 0,4 % de vanadium,
le reste de fer et d'impuretés conditionnées par la fusion.

2. Acier au chrome selon la revendication 1, qui contient cependant, séparément ou ensemble, 0,20 à 0,60 % de silicium, jusqu'à 1,8 % de manganèse, 15 à 17 % de chrome, 0,5 à 1,5 % de nickel, 0,5 à 1,5 % de molybdène, 0,2 à 1,5 % de cuivre, jusqu'à 0,15 % d'azote, jusqu'à 0,35 % de vanadium et 0,002 à 0,006 % de bore.

3. Acier au chrome selon la revendication 1 ou 2, présentant une teneur totale en titane, niobium et zirconium comprise entre 0,01 et 0,1 %.

4. Acier au chrome selon l'une des revendications 1 à 3, qui satisfait à la condition suivante :

$$(\% \text{ Cu}) \, / \, (\% \text{ Cu} + \% \text{ Ni}) = 0{,}2 \text{ à } 0{,}9.$$

5. Acier au chrome selon l'une des revendications 1 à 4, présentant une grosseur des grains de carbure inférieure à 5 $\mu$m.

6. Procédé de réglage de la grosseur des grains de carbure dans un acier au chrome selon l'une des revendications 1 à 4, **caractérisé par** au moins une déformation à froid selon une réduction de la section transversale comprise entre 20 et 45 % sur un intervalle de temps allant jusqu'à 10 millisecondes.

7. Procédé selon la revendication 6, **caractérisé en ce que** l'acier, avant la déformation à froid, subit un recuit de mise en solution pendant 3 à 15 minutes à une température comprise entre 800 et 1150 °C puis est trempé.

8. Utilisation d'un acier au chrome selon l'une des revendications 1 à 7 en tant que matériau soudable permettant de fabriquer des lames et des éléments de lame de rasoirs et de tondeuses pour cheveux, de lames ou couteaux de type lamelles, de lames ou couteaux de type feuilles, de lames pour couteaux rotatifs et de lames d'épilateurs.

Fig. 1

Fig. 2

Fig. 3

Fig. 4

Fig.5

Fig. 6

Fig. 7

Fig. 8